# EUROPEAN PATENT APPLICATION

(11) **EP 2 818 053 A1**
(43) Date of publication of application: **31.12.2014**
(21) Application number: 13173557.3
(22) Date of filing: 25.06.2013
(51) Int. Cl.: A23K 1/16, A01N 47/24, A23K 1/18, A23K 3/03

(54) **Method for enhancing the quantity and/or quality of milk produced by milk-producing animals**

(71) Applicant: BASF SE, 67056 Ludwigshafen (DE)
(72) Inventor: Zuniga Cano, Jesus Daniel, 04671-050 Sao Paulo, SP (BR); Quiros Rojas, Manrique, Heredia (CR); Rois, Jorge Luis, Chiriqui (PA); Taylor, Margie Angelica, CP Mexico D.F. Delegación Benito Juarez (MX); Vilches Rojas, Hernan, Santo Domingo de Heredia (CR)
(74) Representative: Reitstötter Kinzebach

(57) **Abstract**

The present invention relates to a method for enhancing the quantity and/or quality of milk produced by milk-producing animals by feeding the animals with plants from the family of Poaceae or with parts thereof, where the plants or parts thereof, the locus where the plants are growing or are intended to grow and/or plant propagules from which the plants are to grow have been treated with at least one strobilurin fungicide.

The invention further relates to the use of at least one strobilurin fungicide for enhancing the quantity and/or quality of milk produced by milk-producing animals. Further, the invention relates to a method for farming pasture land which is operated by rotational grazing or strip grazing, which method comprises moving a flock or herd after a time interval to another field or field strip, where the field or field strip which has been left by the flock or herd is treated once or several times with at least one strobilurin fungicide.

## Description

The present invention relates to a method for enhancing the quantity and/or quality of milk produced by milk-producing animals by feeding the animals with plants from the family of Poaceae or with parts thereof, where the plants or parts thereof, the locus where the plants are growing or are intended to grow and/or plant propagules from which the plants are to grow have been treated with at least one strobilurin fungicide. The invention further relates to the use of at least one strobilurin fungicide for enhancing the quantity and/or quality of milk produced by milk-producing animals. Further, the invention relates to a method for farming pasture land which is operated by rotational grazing or strip grazing, which method comprises moving a flock or herd after a time interval to another field or field strip, where the field or field strip which has been left by the flock or herd is treated once or several times with at least one strobilurin fungicide.

The worldwide increasing demand for milk and milk products, especially for high quality milk and milk products, can only be complied with if an efficient food management is provided. Especially in regions with a climate not always favorable for pasture land used to feed milk-producing animals, an efficient food management is not easily supplied, in particular at the end of the rainy season or during the dry season.

It was therefore an object of the present invention to provide a method which enhances the quantity and/or quality of milk produced by milk-producing animals, in particular of milk from milk-producing animals feeding on pasture grass and/or hay produced therefrom, especially feeding essentially or even exclusively on pasture grass and/or hay produced therefrom.

The object is achieved by a method for enhancing the quality and/or quantity of milk produced by milk-producing animals, which method comprises
(i) treating plants from the family of Poaceae or parts thereof, the locus where the plants are growing or are intended to grow and/or plant propagules from which the plants are to grow with at least one strobilurin fungicide;
(ii) if plant propagules are treated, growing plants therefrom, and if the locus where the plants are intended to grow is treated, growing plants on this locus; and
(iii) feeding the milk-producing animals with the plants obtained in step (i) or (ii) or with parts thereof.

The invention moreover relates to the use of at least one strobilurin fungicide for enhancing the quantity and/or quality of milk produced by milk-producing animals.

"Enhancing the quantity and/or quality " means that the quantity and/or quality of milk is enhanced as compared to the quantity and/or quality of milk obtained from animals which have been fed with the same quantity of the same plants from the family of Poaceae or with parts thereof, where however the plants, parts thereof, the locus where the plants are growing or are intended to grow and plant propagules from which the plants are to grow have not been treated with at least one strobilurin fungicide.

In the terms of the present invention, criterions of the quality of milk are for example protein content or fat content.

Propagules are all types of plant propagation material. The term embraces seeds, grains, fruit, tubers, rhizomes, spores, cuttings, offshoots, meristem tissues, single and multiple plant cells and any other plant tissue from which a complete plant can be obtained. One particular propagule is seed.

In the context of the present invention, parts of the plant refer to overground parts, such as leaves, stem, blossoms, flowers, fruit and the like. Treatment of the plant refers to treating the whole plant, specifically the whole overground part of the plant, but also only overground parts of the plant, such as the leaves.

Locus means soil, area, material or environment where the plant is growing or intended to grow.

The below remarks made to different features of the method of the invention, e.g. to preferred strobilurins, plants, animals etc. apply to each feature as taken alone as well as to every conceivable combination of features. Moreover, the remarks also apply to the use according to the invention.

The method of the present invention preferably serves for enhancing the quantity of milk.

Strobilurin fungicides are, in principle, known to the skilled worker and described, for example, in the Compendium of Pesticide Common Names, http://www.alanwood.net/pesticides/.

The at least one strobilurin fungicide is preferably selected from azoxystrobin, coumethoxystrobin, coumoxystrobin, dimoxystrobin, enestroburin, fenaminstrobin, fenoxy-strobin/flufenoxystrobin, fluoxastrobin, kresoxim-methyl, metominostrobin, orysastrobin, picoxystrobin, pyraclostrobin, pyrametostrobin, pyraoxystrobin, pyribencarb, trifloxystrobin, 2-(2-(6-(3-chloro-2-methyl-phenoxy)-5-fluoro-pyrimidin-4-yloxy)-phenyl)-2-methoxyimino-N-methyl-acetamide, 3-methoxy-2-(2-(N-(4-methoxy-phenyl)-cyclopropane-carboximidoylsulfanylmethyl)-phenyl)-acrylic acid methyl ester, methyl (2-chloro-5-[1-(3-methylbenzyloxyimino)ethyl]benzyl)carbamate and 2-(2-(3-(2,6-dichlorophenyl)-1-methyl-allylideneaminooxymethyl)-phenyl)-2-methoxyimino-N-methylacetamide. More preferably, the at least one strobilurin fungicide is preferably selected from azoxystrobin, dimoxystrobin, fluoxastrobin, fluxapyroxade, kresoxim-methyl, orysastrobin, picoxystrobin, pyraclostrobin and trifloxystrobin. Specifically, the strobilurin fungicide is pyraclostrobin.

In step (i), preferably the plants or parts thereof and/or the locus where the plants are growing is treated; i.e. it is preferred to treat the plants or parts thereof after emergence. More preferably, the plants or parts thereof are treated.

The plants belonging to the family Poaceae (Gramineae) are the "true grasses" and include most plants grown as grains, for pasture, and for lawns (turf). They include some more specialised crops such as lemongrass, as well as many ornamental plants. They also include plants often not recognized to be grasses, such as bamboos or some species of weeds called crab grass. More then 650 genera encompassing over 10,000 species belong to the Poaceae familiy.

Preferably, the Poaceae to be treated according to the present invention are different from cereals. Cereals in turn are the cultivated forms of grasses (Poaceae) and include for example wheat (inclusive spelt, einkorn, emmer, kamut, durum and triticale), rye, barley, rice, wild rice, maize (corn), millet, sorghum, teff and oats.

More preferably, the Poaceae to be treated according to the present invention are selected from pasture grass, i.e. grass growing on pasture land or cultivated for being fed to grazing animals (especially in form of hay), such as cows (cattle), sheep, goats, horses, donkeys, buffalos or yaks. Preferably, the pasture grass is selected from the genus Lolium, Brachiaria, Cynodon and Pennisetum and more preferably from the genus Brachiaria, Cynodon and Pennisetum. In particular, the pasture grass is selected from the genus Brachiaria, and is specifically Brachiaria arrecta (Tanner grass).

In a preferred embodiment, in step (i), the at least one strobilurin fungicide is applied to pasture grass during its regeneration period, i.e. during the period in which it is not grazed, but is left to regenerate.

The milk-producing animals are preferably selected from cattle (cows), sheep, goats, buffalos and yaks, more preferably from cattle, sheep and goats and in particular from cattle. Evidently, the milk-producing animals are female.

In step (iii), the milk-producing animals are preferably fed either by being left to graze the plants obtained in steps (i) or (ii) or are fed with cut grass or hay produced from the plants obtained in steps (i) or (ii). More preferably, they feed by grazing.

It has to be mentioned that step (iii) does not encompass feeding the animals with silage prepared from the plants obtained in steps (i) or (ii) or parts thereof.

The invention moreover relates to a method for farming pasture land which is operated by rotational grazing or strip grazing, which method comprises moving a flock or herd after a time interval to another field or field strip, where the field or field strip which has been left by the flock or herd is treated once or several times with the at least one strobilurin fungicide, where the treatment is ceased at least 10 days before the treated field or field strip is used again for grazing or for harvesting.

In rotational grazing (also called block grazing), a herd or flock is moved frequently (days to weeks) from field to field in a management system, thus allowing a period of absence from each pasture area after it has been grazed.

In strip grazing, which is a specific form of rotational grazing, the field is grazed in strips which are changed very frequently, for example every hour to every 3 days. This is generally carried out by placement of an electric fence, which allows a high flexibility of the place to which the flock or herd is moved and of the time interval. Strip grazing is a grazing management system that involves giving the livestock a fresh allocation of pasture very frequently. This system is often employed where there is a significant excess of forage early in the season and where providing the livestock with access to a larger area would result in waste - for example through trampling or spoiling by dung. Strip grazing systems are widely used in the dairy sector and for beef and sheep where these animals are being provided with root crops as their primary forage.

The flock or herd is preferably of milk-producing animals; these being preferably selected from cattle (cows), sheep, goats, buffalos and yaks, more preferably from cattle, sheep and goats and in particular from cattle.

As regards suitable and preferred strobilurins and suitable and preferred pasture grass, reference is made to the above remarks.

Preferably, the flock or herd is moved every 6 hours to 3 weeks, more preferably every one to three days and in particular every day to another field or field strip.

In the method of the invention for farming pasture land, the treatment is ceased at least 10 days before the treated field or field strip is used again for grazing or for harvesting. This is done in order to allow the strobilurin residues to degrade to an acceptable level. Especially, this is done in order to respect the preharvest interval (PHI). The PHI is a function of a pesticide's use pattern and of the amount of pesticide residues allowed on the crop on harvest. Residue levels are affected by the crop's growth and environmental conditions (e.g. rain, UV radiation, microorganisms). In any case, it must be long enough to allow the pesticide residues to degrade to an acceptable level. Preferably, the treatment is preferably ceased at least 15 days, more preferably at least 21 days, before the treated field or field strip is used again for grazing or for harvesting.

In the methods of the invention (both for enhancing the quantity and/or quality of milk as well as for farming pasture land), the at least one strobilurin fungicide is preferably employed in an overall amount of from 1 to 1000 g/ha, more preferably in an amount of from 10 to 500 g/ha, even more preferably from 50 to 250 g/ha and in particular from 100 to 150 g/ha.

In the methods of the invention (both for enhancing the quantity and/or quality of milk as well as for farming pasture land), the at least one strobilurin fungicide can be applied once or several times, e.g. 1, 2 or 3 times, preferably once or twice, in particular once, before the plant or its crop is used (e.g. grazed or harvested).

The strobilurin fungicide(s) is generally used as ready-to-use preparations. In the following, suitable ready-to-use preparations containing at least one strobilurin fungicide (called in the following "active ingredient") are described.

In ready-to-use preparations, the active ingredient can be present in suspended, emulsified or dissolved form. The application forms depend entirely on the intended uses. The active ingredient can be applied as such, in the form of its formulations or the application form prepared therefrom, for example in the form of directly sprayable solutions, powders, suspensions or dispersions, including highly concentrated aqueous, oily or other suspensions or dispersions, emulsions, oil dispersions, pastes, dusts, compositions for broadcasting or granules. Application is for example by spraying, immersing, dousing, sprinkling, spraying, dipping, coating, dressing, atomizing, dusting, broadcasting or watering. The application forms and methods depend on the intended uses; in each case, they should ensure the finest possible distribution of the active compounds.

Depending on the embodiment in which the ready-to-use preparations of the active ingredient is present, they comprise one or more liquid or solid carriers, if appropriate surfactants and if appropriate further auxiliaries customary for formulating crop protection agents. The recipes for such formulations are familiar to the person skilled in the art.

Aqueous application forms can be prepared, for example, from emulsion concentrates, suspensions, pastes, wettable powders or water-dispersible granules by addition of water. To prepare emulsions, pastes or oil dispersions, the active compounds, as such or dissolved in an oil or solvent, can be homogenized in water by means of a wetting agent, tackifier, dispersant or emulsifier. However, it is also possible to prepare concentrates composed of active substance, wetting agent, tackifier, dispersant or emulsifier and, if appropriate, solvent or oil, such concentrates being suitable for dilution with water.

The concentrations of the active ingredient in the ready-to-use preparations can be varied within relatively wide ranges. In general, they are between 0.0001 and 10%, preferably between 0.01 and 1 % (% by weight total content of active compound, based on the total weight of the ready-to-use preparation).

The active ingredient may also be used successfully in the ultra-low-volume process (ULV), it being possible to employ formulations comprising more than 95% by weight of active compound, or even to apply the active ingredient without additives.

Oils of various types, wetting agents, adjuvants, bactericides and/or fertilizers may be added to the active ingredient, even, if appropriate, not until immediately prior to use (tank mix). These agents can be mixed in a weight ratio of from 1:100 to 100:1, preferably from 1:10 to 10:1 with the active ingredient employed.

Adjuvants are for example: modified organic polysiloxanes, e.g. Break Thru S 240^{®}; alkohol alkoxylates, e.g. Atplus 245^{®}, Atplus MBA 1303^{®}, Plurafac LF 300^{®} and Lutensol ON 30^{®}; EO-PO block copolymers, e.g. Pluronic RPE 2035^{®} and Genapol B^{®}; alkohol ethoxylates, e.g. Lutensol XP 80^{®}; and sodium dioctylsulfosuccinate, e.g. Leophen RA^{®}.

The formulations are prepared in a known manner, for example by extending the active ingredient with solvents and/or carriers, if desired with the use of surfactants, i.e. emulsifiers and dispersants. Solvents/carriers suitable for this purpose are essentially:
- water, aromatic solvents (for example Solvesso products, xylene), paraffins (for example mineral oil fractions), alcohols (for example methanol, butanol, pentanol, benzyl alcohol), ketones (for example cyclohexanone, methyl hydroxybutyl ketone, diacetone alcohol, mesityl oxide, isophorone), lactones (for example gamma-butyrolactone), pyrrolidones (pyrrolidone, N-methylpyrrolidone, N-ethylpyrrolidone, n-octylpyrrolidone), acetates (glycol diacetate), glycols, dimethyl fatty acid amides, fatty acids and fatty acid esters. In principle, solvent mixtures may also be used.
- Carriers such as ground natural minerals (for example kaolins, clays, talc, chalk) and ground synthetic minerals (for example finely divided silica, silicates); emulsifiers such as nonionic and anionic emulsifiers (for example polyoxyethylene fatty alcohol ethers, alkylsulfonates and arylsulfonates), and dispersants such as lignosulfite waste liquors and methylcellulose.

Suitable surfactants are alkali metal salts, alkaline earth metal salts and ammonium salts of lignosulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ether, ethoxylated isooctylphenol, octylphenol, nonylphenol, alkylphenyl polyglycol ether, tributylphenyl polyglycol ether, tristerylphenyl polyglycol ether, alkylaryl polyether alcohols, alcohol and fatty alcohol ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose.

Suitable for the preparation of directly sprayable solutions, emulsions, pastes or oil dispersions are mineral oil fractions of medium to high boiling point, such as kerosene or diesel oil, furthermore coal tar oils and oils of vegetable and animal origin, aliphatic, cyclic and aromatic hydrocarbons, for example toluene, xylene, paraffin, tetrahydronaphthalene, alkylated naphthalenes or their derivatives, methanol, ethanol, propanol, butanol, cyclohexanol, cyclohexanone, mesityl oxide, isophorone, strongly polar solvents, for example dimethyl sulfoxide, 2-yrrolidone, N-methylpyrrolidone, butyrolactone, or water.

Powders, compositions for broadcasting and dusts can be prepared by mixing or jointly grinding the active ingredient with a solid carrier.

Granules, for example coated granules, impregnated granules and homogeneous granules, can be prepared by binding the active ingredient onto solid carriers. Solid carriers are, for example, mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers such as, for example, ammonium sulfate, ammonium phosphate, ammonium nitrate, ureas and plant products such as cereal meal, tree bark meal, wood meal and nutshell meal, cellulose powder and other solid carriers.

In general, the formulations comprise between 0.01 and 95% by weight, preferably between 0.1 and 90% by weight, in particular 5 to 50% by weight, of the active ingredient. In this context, the active ingredient is employed in a purity of from 90% to 100%, preferably 95% to 100% (according to NMR spectrum).

After two- to ten-fold dilution, formulations for seed treatment may comprise 0.01 to 60% by weight, preferably 0.1 to 40% by weight of the active ingredient in the ready-to-use preparations.

Examples of formulations are:

### 1. Products for dilution in water

### I) Water-soluble concentrates (SL, LS)

10 parts by weight of active compound are dissolved in 90 parts by weight of water or a water-soluble solvent. Alternatively, wetting agents or other adjuvants are added. Upon dilution in water, the active compound dissolves. The ready formulation contains 10% by weight of active ingredient.

### II) Dispersible concentrates (DC)

20 parts by weight of active compound are dissolved in 70 parts by weight of cyclohexanone with addition of 10 parts by weight of a dispersant, for example polyvinylpyrrolidone. The active ingredient is contained in 20% by weight. Upon dilution in water, a dispersion results.

### III) Emulsifiable concentrates (EC)

15 parts by weight of active compound are dissolved in 75 parts by weight of xylene with addition of calcium dodecylbenzenesulfonate and castor oil ethoxylate (in each case 5 parts by weight). The active ingredient is contained in 15% by weight. Upon dilution in water, an emulsion results.

### IV) Emulsions (EW, EO, ES)

25 parts by weight of active compound are dissolved in 35 parts by weight of xylene with addition of calcium dodecylbenzenesulfonate and castor oil ethoxylate (in each case 5 parts by weight). This mixture is introduced into 30 parts by weight of water by means of an emulsifier (Ultraturrax) and made into a homogeneous emulsion. The active ingredient is contained in 25% by weight. Upon dilution in water, an emulsion results.

### V) Suspensions (SC, OD, FS)

20 parts by weight of active compound are comminuted in a stirred ball mill with addition of 10 parts by weight of dispersants, wetting agents and 70 parts by weight of water or an organic solvent to give a fine suspension of active compound. The active ingredient is contained in 20% by weight. Upon dilution in water, a stable suspension of the active compound results.

### VI) Water-dispersible and water-soluble granules (WG, SG)

50 parts by weight of active compound are ground finely with addition of 50 parts by weight of dispersants and wetting agents and made into water-dispersible or water-soluble granules by means of technical apparatuses (for example extrusion, spray tower, fluidized bed). The active ingredient is contained in 50% by weight. Upon dilution in water, a stable dispersion or solution of the active compound results.

### VII) Water-dispersible and water-soluble powders (WP, SP, SS, WS)

75 parts by weight of active compound are ground in a rotor-stator mill with addition of 25 parts by weight of dispersants, wetting agents and silica gel. The active ingredient is contained in 75% by weight. Upon dilution in water, a stable dispersion or solution of the active compound results.

### VIII) Gel formulations (GF)

20 parts by weight of active compound, 10 parts by weight of dispersants, 1 part by weight of gelling agent and 70 parts by weight of water or an organic solvent are ground in a ball mill to give a finely divided suspension. Upon dilution in water, a stable suspension of the active compound results.

### 2. Products for direct application

### IX) Dusts (DP, DS)

5 parts by weight of active compound are ground finely and mixed intimately with 95 parts by weight of finely particulate kaolin. This gives a dust with 5% by weight of active ingredient.

### X) Granules (GR, FG, GG, MG)

0.5 part by weight of active compound is ground finely and combined with 95.5 parts by weight of carriers. Current methods are extrusion, spray drying or the fluidized bed. This gives granules for direct application with 0.5% by weight of active ingredient.

### XI) ULV solutions (UL)

10 parts by weight of active compound are dissolved in 90 parts by weight of an organic solvent, for example xylene. This gives a product for direct application with 10% by weight of active ingredient.

Suitable formulations for seed treatment are:
I soluble concentrates (SL, LS)
III emulsifiable concentrates (EC)
IV emulsions (EW, EO, ES)
V suspensions (SC, OD, FS)
VI water-dispersible and water-soluble granules (WG, SG)
VII water-dispersible and water-soluble powders (WP, SP, WS)
VIII gel formulations (GF)
IX dusts and dust-like powders (DP, DS)

Suitable compositions for soil treatment include granules which may be applied in-furrow, as broadcast granules or as impregnated fertilizer granules, and also spray applications which are applied to the soil as a preemergent or postemergent spray.

Suitable compositions for treating the plants, in particular the overground parts thereof, especially the leaves, include spray applications, dusts and microgranules, spray applications being preferred.

Formulations suitable for producing spray solutions for the direct application are:
I soluble concentrates (SL, LS)
II) dispersible concentrates (DC)
III emulsifiable concentrates (EC)
IV emulsions (EW, EO)
V suspensions (SC)
VI water-dispersible and water-soluble granules (WG)
VII water-dispersible and water-soluble powders (WP, SP)

Especially, SL and/or EC formulations are used.

The use and the method of the invention lead to an increased quality and especially quantity of milk produced by milk-producing animals. This effect is particularly manifest in pasture grass which has been worn out or depleted, e.g. by grazing, trampling, spoiling by dung and/or negative weather conditions, such as heat or cold or strong variations in temperature or temperatures unusual for the specific season, drought or extreme wetness.

The invention is further illustrated by the following, non-limiting examples.

### Examples

### Example 1: Enhancement of the quantity of milk

The experiment was carried out from January to April 2012. Pasture land with grass mainly composed of Brachiaria arrecta (Tanner grass) in Panama, province of Chiriquí was operated under rotational grazing with 30 lots of ca. 7600 m² each. The herd of 90 dairy cows was moved daily to the next, fresh lot. Five lots were chosen for the method of the present invention: Lot 13 was used as control (no treatment), while lots 14, 15 and 16 were treated with pyraclostrobin. The treatment was carried out by spraying the grass of the respective lot 7 days after this had been grazed and the herd removed. Pyraclostrobin was used in form of the commercial product Regnum® 25 EC, diluted with water to a concentration of 2.5 g of commercial product per I and sprayed with 12 I power pump to the grass (application rate: 125 g of pyraclostrobin per ha). 21 days after the treatment the herd was allowed to graze the respective lot. One day after grazing the respective lot, the total milk quantity of the 90 cows was determined and compared with the results from lot 13 (of course also measured one day after grazing this lot). This procedure was repeated during the three consecutive months. The overall quantities obtained in January, February, March and April 2012 as well as the average quantity per cow per day are compiled in the table below for each lot.

**Table**

| Lot no. | Overall quantity of milk [kg/day] from 90 cows determined one day after grazing the lot (January-April 2012) | Average quantity of milk [kg/day] per cow and day |
|---|---|---|
| 13 | 9829 | 27.3 |
| 14 | 10207 | 28.4 |
| 15 | 10242 | 28.5 |
| 16 | 10464 | 29.1 |

As can be seen, the treatment of pasture land with pyraclostrobin results in an increased milk production of cattle feeding on the treated grass.

## Claims

1. A method for enhancing the quantity and/or quality of milk produced by milk-producing animals, which method comprises
(i) treating plants from the family of Poaceae or parts thereof, the locus where the plants are growing or are intended to grow and/or plant propagules from which the plants are to grow with at least one strobilurin fungicide;
(ii) if plant propagules are treated, growing plants therefrom, and if the locus where the plants are intended to grow is treated, growing plants on this locus; and
(iii) feeding the milk-producing animals with the plants obtained in step (i) or (ii) or with parts thereof.

2. The method as claimed in claim 1, where the at least one strobilurin fungicide is selected from azoxystrobin, coumethoxystrobin, coumoxystrobin, dimoxystrobin, enestroburin, fenaminstrobin, fenoxystrobin/flufenoxystrobin, fluoxastrobin, kresoxim-methyl, metominostrobin, orysastrobin, picoxystrobin, pyraclostrobin, pyrametostrobin, pyraoxystrobin, pyribencarb, trifloxystrobin, 2-(2-(6-(3-chloro-2-methyl-phenoxy)-5-fluoro-pyrimidin-4-yloxy)-phenyl)-2-methoxyimino-N-methylacetamide, 3-methoxy-2-(2-(N-(4-methoxy-phenyl)-cyclopropane-carboximidoyl-sulfanylmethyl)-phenyl)-acrylic acid methyl ester, methyl (2-chloro-5-[1-(3-methylbenzyloxyimino)ethyl]benzyl)carbamate and 2-(2-(3-(2,6-dichlorophenyl)-1-methyl-allylideneaminooxymethyl)-phenyl)-2-methoxyimino-N-methyl-acetamide.

3. The method as claimed in claim 2, where the strobilurin fungicide is pyraclostrobin.

4. The method as claimed in any of the preceding claims, for enhancing the quantity of milk produced by milk-producing animals.

5. The method as claimed in any of the preceding claims, where the plants or parts thereof and/or the locus where the plants are growing are treated.

6. The method as claimed in any of the preceding claims, where the Poaceae are selected from pasture grass, preferably from the genus Brachiaria, Cynodon and Pennisetum.

7. The method as claimed in claim 6, where the pasture grass is from the genus Brachiaria and is in particular Brachiaria arrecta.

8. The method as claimed in any of claims 6 or 7, where the at least one strobilurin fungicide is applied to pasture grass during its regeneration period.

9. The method as claimed in any of the preceding claims, where the milk-producing animals are selected from cattle, sheep and goats and preferably from cattle.

10. The method as claimed in any of the preceding claims, where the milk-producing animals are fed in step (iii) either by grazing the plants obtained in steps (i) or (ii) or with cut grass or hay produced from the plants obtained in steps (i) or (ii), and preferably by grazing.

11. A method for farming pasture land which is operated by rotational grazing or strip grazing, which method comprises moving a flock or herd after a time interval to another field or field strip, where the field or field strip which has been left by the flock or herd is treated once or several times with the at least one strobilurin fungicide as defined in any of claims 1 to 3, where the treatment is ceased at least 10 days before the treated field or field strip is used again for grazing or for harvesting.

12. The method as claimed in claim 11, where the flock or herd is moved every 6 hours to 3 weeks, preferably every one to three days to another field or field strip.

13. The method as claimed in any of claims 11 or 12, where the treatment is ceased at least 15 days, preferably at least 21 days, before the treated field or field strip is used again for grazing or for harvesting.

14. The use of at least one strobilurin fungicide as defined in any of claims 1 to 3 for enhancing the quantity and/or quality of milk produced by milk-producing animals as defined in any of claims 1 or 9.
